# FASCICULE DE BREVET EUROPEEN

(11) **EP 0 626 547 B1**
(45) Date de publication et mention de la délivrance du brevet: **12.07.2000**
(21) Numéro de dépôt: 94470015.2
(22) Date de dépôt: 20.05.1994
(51) Int. Cl.: F27B 3/04, C21C 5/52

(54) **Procédé de production d'acier liquide à partir de matières ferreuses riches en matières carbonnées**
Verfahren zur Herstellung von geschmolzenem Stahl aus Kohlenstoffenreichem eisenhaltigen Material
Process for the liquid steel production from carbon-rich ferrous material

(30) Priorité: 27.05.1993 FR 9306622
(43) Date de publication de la demande: 30.11.1994
(73) Titulaire: SOLLAC S.A., 92800 Puteaux (FR)
(72) Inventeur: De Lassat de Pressigny, Yann, F-57070 Metz (FR); Gaye, Henri, F-57000 Metz (FR); Roth, Jean-Luc, F-57000 Metz (FR); Zbaczyniak, Yves, F-57070 Metz (FR); Gatellier, Christian, F-57158 Montigny-Lès-Metz (FR); Grisvard, Claude, F-57140 Woippy (FR); Roth, Raoul, F-69100 Villeurbanne (FR)
(74) Mandataire: Ventavoli, Roger

(56) Documents cités:
- EP-A- 0 199 714
- DE-A- 3 232 139
- GB-A- 2 030 179

## Description

L'invention concerne l'élaboration de l'acier au four électrique. Elle concerne plus particulièrement les procédés d'élaboration d'acier dans lesquels les matières premières sont constituées partiellement ou totalement par du minerai de fer préréduit, et non uniquement par des ferrailles.

Actuellement, des recherches sont activement conduites afin de mettre au point des procédés sidérurgiques qui pourraient se substituer au haut fourneau. Les inconvénients du haut fourneau que de tels procédés visent à éliminer sont son manque de souplesse de fonctionnement, et la nécessité de lui associer une cokerie et une installation d'agglomération du minerai de fer. Par ailleurs, il faudrait que les nouveaux procédés conservent les excellentes performances énergétiques du haut fourneau.

Ces nouveaux procédés sont souvent désignés par le terme : procédés de "réduction-fusion" ou "smelting reduction". L'un d'entre eux associe deux réacteurs. L'un de ces réacteurs produit à partir de minerai de fer du minerai très fortement réduit à l'état métallique, qui est enfourné dans le deuxième réacteur pour être transformé en fonte liquide ou directement en acier sauvage. Les circuits gazeux de ces deux réacteurs peuvent être liés l'un à l'autre, ou être totalement indépendants.

Une forme de réalisation particulière d'un tel procédé est décrite par exemple dans l'article "Reduction of fine ore in the circulating fluid bed as the initial stage in smelting reduction (Metallurgical Plant and Technology International, mars 1991, pp 28-32) et dans la Demande de brevet français n° 91.14467 au nom de la demanderesse. La réaction de réduction du minerai de fer s'effectue en faisant réagir un lit fluidisé circulant formé par des particules de minerai en cours de réduction et de semi-coke, avec un gaz réducteur (mélange CO/CO₂/H₂/H₂0) qui assure également la fluidisation. Celle-ci a lieu dans une première partie du réacteur. Les gaz chargés en particules de minerai en cours de réduction et de semi-coke passent ensuite dans un cyclone. Les gaz s'échappent alors du réacteur, tandis que les particules descendent dans un gazéifieur, où sont introduits séparément ou ensemble du charbon et de l'oxygène dans le but de former du CO et de l'hydrogène qui vont contribuer à la réduction du minerai. Les matières solides et les gaz reviennent ensuite dans la première partie du réacteur, d'où une fraction des matières solides (minerai réduit et semi-coke) est extraite périodiquement ou continûment. Du minerai neuf est introduit dans le courant de matières entre le cyclone et le gazéifieur. Les gaz qui se sont échappés du cyclone sont épurés et réintroduits dans le gazéifieur et à la base de la première partie du réacteur, où ils peuvent rejouer leur rôle de milieu fluidisant et réactionnel.

Les matières solides extraites du réacteur sont ensuite dirigées vers le réacteur de fusion pour contribuer à y produire du métal liquide (fonte, semi-fonte ou acier, selon sa teneur en carbone). Comme on l'a dit, ces matières sont composées pour l'essentiel d'un mélange de minerai de fer fortement réduit (à environ 75 % au moins) et de semi-coke avec accessoirement d'autres matières non ferreuses impuretés provenant du minerai et additifs éventuels.

Ces matières (que, pour simplifier, on désignera dans la suite du texte par le terme "préréduit") se distinguent des minerais préréduits produits par d'autres types d'installation en ce que leurs teneurs en carbone et en soufre peuvent être particulièrement élevées. Elles sont respectivement de 4 à 7 %, voire davantage (contre 1 à 3 % habituellement) et de 0,06 à 0,1 % (contre de 0,01 à 0,02 % habituellement). Cette teneur en soufre élevée est due à l'utilisation de charbon comme source de carbone, au lieu de gaz naturel pour les autres procédés de fusion-réduction. Elle rend souhaitable l'exécution d'une opération de désulfuration sur la fonte liquide avant sa transformation en acier, lorsqu'on désire élaborer ensuite des nuances d'acier à très basses teneurs résiduelles en soufre (de quelques millièmes de %). En effet l'obtention d'une telle très basse teneur en soufre uniquement grâce à une désulfuration sur l'acier liquide serait difficile et onéreuse.

Le réacteur de fusion des matières solides peut être un convertisseur ou un four électrique d'aciérie de construction classique. Le four électrique présente l'avantage sur le convertisseur d'être moins coûteux en investissements et en exploitation, lorsque la capacité de l'installation est de l'ordre de 100 t de métal liquide ou moins. D'autre part, il autorise une grande souplesse dans le choix des matières premières puisque le préréduit peut y être sans problèmes mélangé à une quantité quelconque de ferrailles. On ajuste de manière optimale cette quantité en fonction des coûts respectifs des matières enfournées et des teneurs tolérables dans le métal final en éléments résiduels (cuivre, chrome, nickel...) inévitablement présents dans les ferrailles et quasiment absents des préréduits.

Le four électrique classique se prête mal de par sa forme à l'exécution de la désulfuration de la fonte et généralement aux autres opérations de prétraitement que celle-ci peut habituellement subir avant sa transformation en acier (désiliciation, déphosphoration). Ces opérations réclament un intense brassage entre le métal et le laitier, et il est préférable à cet effet de transvaser la fonte liquide dans un autre réacteur (poche d'aciérie de forme tronconique ou poche en forme de torpille servant habituellement au transport de la fonte). Après le prétraitement, la fonte est remise dans le four pour y être décarburée. Mais elle risque alors d'être polluée par le restant de la fonte non prétraitée et le laitier résiduel riche en soufre et en phosphore qui s'y trouvent déjà inévitablement à la suite de la phase de fusion. Cela est surtout vrai si la bonne marche du four y nécessite la présence permanente d'un pied de bain. De plus, on n'obtiendrait qu'une productivité médiocre de l'installation, puisque le four resterait inactif pendant le prétraitement.

Le but de l'invention est de proposer un procédé d'élaboration d'acier à partir de minerais préréduits riches en carbone, permettant d'obtenir un acier ayant une très faible teneur en soufre, et, le cas échéant, en phosphore, pour un coût d'investissement et une productivité aussi avantageux que possible.

A cet effet, l'invention a pour objet un procédé de production d'acier liquide selon lequel on réalise la fusion de matières ferreuses constituées par des minerais préréduits contenant plus de 4% de carbone et plus de 0,06% de soufre de manière à obtenir un métal liquide carburé, puis la décarburation dudit métal liquide de manière à le transformer en acier liquide, caractérisé en ce qu'on réalise la fusion desdites matières ferreuses dans une première cuve d'un four électrique, on réalise ensuite un prétraitement dudit métal liquide carburé ainsi obtenu dans une installation de prétraitement séparée, et on réalise enfin la décarburation dudit métal liquide carburé dans une deuxième cuve d'un four électrique, ledit prétraitement comportant une opération de désulfuration du métal carburé.

Préférentiellement, les première et deuxième cuves sont constituées par les deux cuves d'un four électrique à double cuve et alimentation électrique unique.

Comme on l'aura compris, le principe de l'invention consiste à utiliser, pour obtenir l'acier liquide, deux fours électriques distincts ou, mieux, un four électrique à double cuve ne comportant qu'une seule installation électrique qui alimente en alternance les deux cuves. La première cuve est spécialisée dans la fusion des matières ferrifères destinées à former un métal liquide riche en carbone qui peut contenir des quantités notables de soufre. La deuxième cuve est spécialisée dans la décarburation du métal liquide prétraité, éventuellement mélangé à une fraction de matières ferrifères de préférence pauvres en soufre. A côté de ces deux fours ou de ce four à double cuve se trouve une station de prétraitement du métal riche en carbone. Celui-ci, après sa fusion complète dans la première cuve, y est transvasé et traité. Ce traitement peut notamment consister en une désulfuration. Après quoi, le métal liquide est transvasé dans la deuxième cuve pour y être décarburé.

L'invention sera mieux comprise à la lecture de la description qui suit, donnée en référence à la figure unique annexée qui schématise les différents réacteurs de l'installation et leurs annexes nécessaires pour mettre en oeuvre le procédé selon l'invention.

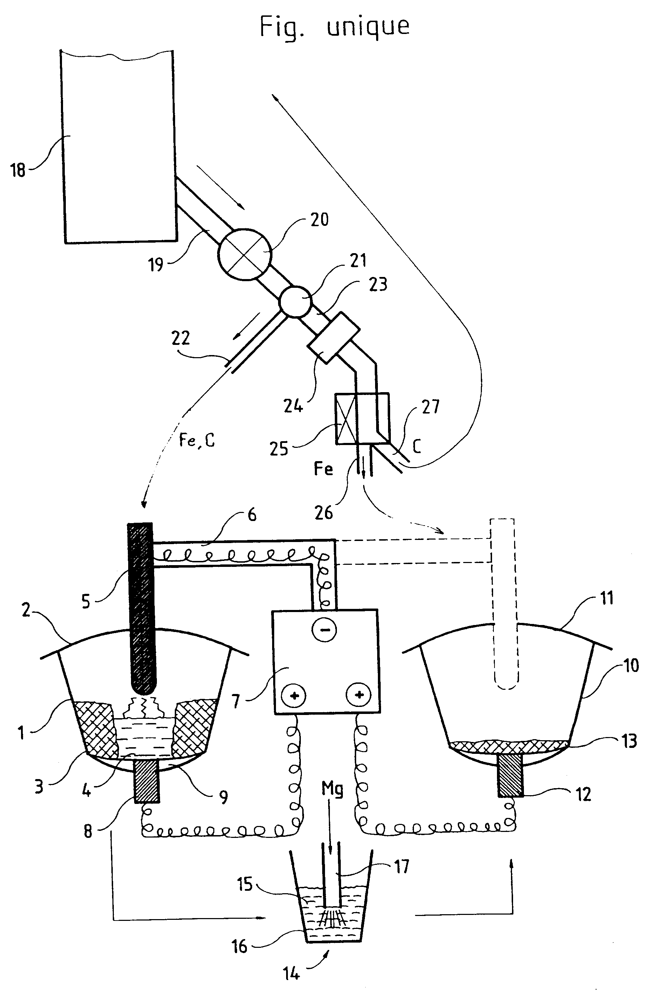

Sur la figure 1 sont schématisés les organes essentiels d'un exemple d'installation selon l'invention. Elle comprend un four électrique à double cuve du type "à courant continu mono-électrode", mais un four du type "à courant continu multi-électrodes" ou du type classique "à courant alternatif" pourrait également convenir. Ce four comprend une première cuve 1 coiffée d'une voûte 2, renfermant des préréduits 3 fortement carburés en cours de fusion et la fonte liquide 4 contenant par exemple 4 à 7 % de carbone résultant de cette fusion. Celle-ci est obtenue au moyen d'un arc électrique établi entre d'une part une électrode de voûte 5 maintenue par une potence 6 et reliée à la borne négative (selon l'exemple représenté) d'un générateur de courant continu 7, et d'autre part la fonte liquide 4. A cet effet, celle-ci est reliée à une borne positive (selon l'exemple représenté) du générateur 7 par l'intermédiaire d'une électrode 8 à âme métallique traversant la sole réfractaire 9 de la cuve 1. Cette électrode est appelée "électrode de sole" et est d'un type connu en lui-même (voir par exemple les Brevets Européens EP 0183631 et EP 0235465). Le four comprend également une deuxième cuve 10 identique à la première cuve 1 et, de même, coiffée d'une voûte 11. Elle comporte sa propre électrode de sole 12 reliée à une autre borne positive du générateur 7. Mais son alimentation électrique ne peut être assurée que par la même électrode de voûte 5 et le même générateur 7 que ceux de la première cuve 1, ce que symbolise le dessin en pointillés de la potence 6 et de l'électrode 5 insérée dans la deuxième cuve 10. Ceci implique que seule l'une des deux cuves 1 ou 10 peut être en fonctionnement à un instant donné, l'autre étant maintenue en attente. On peut profiter de cette attente pour y charger les matières solides qui y seront fondues lors de l'utilisation suivante de la cuve, ce que montre le tas de matières 13 représenté dans le fond de la deuxième cuve 10. A proximité des deux cuves 1 et 10 se trouve une station de désulfuration de la fonte 14. La fonte liquide 15 qui a été coulée de la première cuve 1 dans une poche 16 (ou tout autre récipient approprié) y subit un traitement de désulfuration par insufflation en son sein de magnésium au moyen d'une lance pneumatique 17, selon un procédé largement connu. Outre le magnésium, on peut insuffler dans le même but du carbonate de sodium, de la chaux, du carbure de calcium ou un mélange de plusieurs de ces composés. La teneur en carbone élevée de la fonte est favorable à une bonne efficacité de la désulfuration. Après désulfuration, la fonte 14 est transvasée dans la deuxième cuve 10 pour y être décarburée, et donc transformée en acier liquide.

La figure 1 schématise également des installations annexes à l'installation de fusion et de traitement de la fonte qui vient d'être décrite. La fonction de ces installations annexes est de sélectionner les matières qui vont pouvoir être enfournées dans l'une ou l'autre des cuves 1 et 10. On a représenté la partie inférieure d'un réacteur 18 de préréduction du minerai de fer, du type de ceux décrits dans l'article et la Demande de brevet français cités dans la partie introductive du présent texte. C'est dans cette partie inférieure que sont extraites par une conduite 19, de manière intermittente ou continue, les matières solides produites par ce réacteur. Celles-ci consistent en du minerai de fer préréduit, métallisé à 80-85 % et mélangé à des matières carbonées constituant 4 à 7 % en poids du mélange, voire davantage. Le débit d'extraction des matières solides est commandé par une vanne 20. A leur sortie de la vanne 20, les matières solides entrent dans un dispositif de dérivation 21 qui les oriente dans l'une ou l'autre des conduites 22 ou 23. Dans la conduite 22, les matières ne subissent aucun traitement particulier, et conservent donc les proportions respectives de préréduit et de carbone qu'elles avaient en sortie du réacteur 18 de préréduction.

La conduite 22 les oriente alors vers la première cuve 1, soit directement, soit par l'intermédiaire d'une trémie de stockage non représentée. Ces matières sont donc destinées à former une partie du métal qui sera ultérieurement coulé. Leur fusion dans la première cuve produira une fonte à teneur en soufre élevée (0,06 à 0,1 %), puisque l'apport de carbone est réalisé par du charbon non désulfuré. Sur la conduite 23 est implanté un dispositif refroidisseur 24, tel qu'une chemise à circulation d'eau, destiné à abaisser la température des matières ferreuses en dessous du point de Curie, soit 770°C (à la sortie du réacteur de préréduction 18, leur température est de l'ordre de 950°C). On rend ainsi les particules ferreuses sensibles à l'action d'un champ magnétique. Les matières solides passent ensuite dans une installation de séparation magnétique 25 qui dévie la trajectoire des matières ferreuses et les oriente dans une conduite 26. Celle-ci alimente (directement ou par l'intermédiaire d'une trémie de stockage non représentée) la deuxième cuve 10 en matières ferreuses appauvries en matières carbonées, ce qui permet de compléter si nécessaire la charge métallique du four avec un apport moindre de carbone et surtout de soufre. On cherche ainsi à ne pas annuler de manière trop sensible une partie des bénéfices retirés de la désulfuration subie par la fonte 15 avant son enfournement dans la deuxième cuve 10. Ces matières ferreuses peuvent être ajoutées dans la deuxième cuve 10 avant l'enfournement de la fonte désulfurée, et il est alors possible de réaliser leur fusion avant cet enfournement. Elles peuvent aussi être ajoutées pendant la décarburation. Quant aux matières carbonées sortant de l'installation de séparation magnétique 25 par la conduite 27, elles sont recyclées dans l'installation de préréduction 18. L'installation peut être complétée par des moyens d'enfournement de ferrailles dans l'une et l'autre des cuves 1 et 10 afin de compléter leurs charges si on le désire, lorsque les exigences sur les teneurs en éléments résiduels ne sont pas trop sévères. En jouant sur les proportions respectives de préréduit et de ferrailles dans la formation du métal coulé, on peut réaliser un compromis entre les aspects métallurgiques et les aspects économiques, compte tenu des prix respectifs du préréduit et des différentes qualités de ferrailles disponibles sur le marché.

On peut également songer à obtenir de l'acier liquide directement à partir de préréduits décarbonés dans l'installation de séparation magnétique précédemment décrite. Il faut alors prévoir sur la conduite 26 une dérivation non représentée en direction de la première cuve 1. Cependant, ces préréduits ne peuvent être suffisamment décarbonés pour que leur teneur en soufre soit abaissée à un niveau tel qu'on puisse se passer d'une étape de désulfuration spécifique pour les nuances les plus exigeantes. Et celle-ci est plus efficace si elle est conduite sur un métal carburé que sur un acier. Par conséquent, le passage d'un préréduit solide à un acier liquide fortement désulfuré s'avère métallurgiquement et aussi financièrement plus favorable s'il comporte un passage intermédiaire par une fonte liquide ou, plus généralement, par un métal liquide plus carburé que ne l'est normalement un acier.

Les utilisations des deux cuves 1 et 10 du four et de l'installation de désulfuration 14 doivent être synchronisées de telle manière que seule l'une des deux cuves soit, à un instant donné, en phase de fusion (puisqu'elles ont une alimentation électrique (5,6,7) commune), que cette installation de production d'électricité (5,6,7) soit utilisée le plus souvent possible, et que l'intervalle de temps entre deux coulées d'acier issues de la deuxième cuve 10 soit le plus réduit possible.

Un exemple non limitatif de schéma d'élaboration d'un acier au moyen de l'installation qui vient d'être décrite va à présent être proposé. Le tableau suivant en détaille la chronologie en partant de la première mise en route de l'installation après un arrêt. On suppose que chaque cuve 1, 10 a une capacité de 100 t de métal liquide, que la puissance de l'installation électrique 7 est de 70 MW, et que la fusion de 100 t de préréduit dure dans ces conditions 26 minutes. On se donne également 3 minutes pour effectuer la permutation de l'électrode de voûte 5 d'une cuve à l'autre. Dans le tableau, les phases pendant lesquelles l'installation électrique est utilisée sont soulignées. Les temps d'attente sur chaque cuve sont mis à profit pour effectuer des opérations d'entretien, telles qu'un décrassage poussé du laitier présent, ou des réparations sur le revêtement réfractaire.

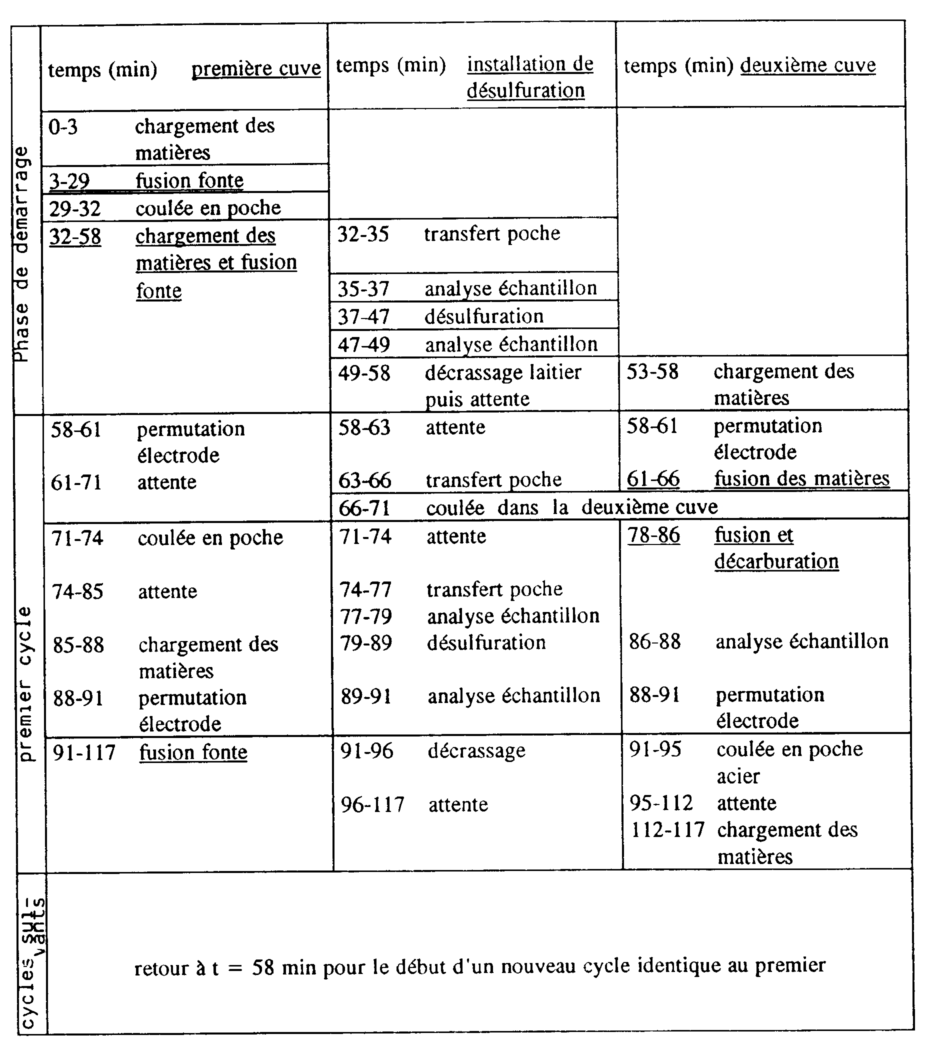

On voit d'après ce tableau que chaque cycle d'opérations dure selon ce schéma 59 minutes. Ce temps est donc celui qui s'écoule entre deux opérations de coulée d'acier hors de la deuxième cuve du four. D'autre part, on constate que pendant ce cycle, l'installation électrique est utilisée pendant 46 minutes, soit 78 % de la durée totale du cycle.

A titre de comparaison, une élaboration conduite dans un four électrique classique à cuve unique de mêmes puissance et capacité que dans l'exemple précédent, couplé à une installation de désulfuration, durerait 79 minutes avec un coefficient d'utilisation de l'installation électrique de seulement 59 %. L'utilisation d'un four à double cuve et à alimentation électrique unique permet donc de réaliser un gain de productivité de l'ordre de 25 % qui permet de compenser rapidement les investissements supplémentaires à engager. De plus, chaque cuve étant dans l'invention spécialisée dans le traitement d'une fonte désulfurée ou non encore désulfurée, il n'y a pas de risque de pollution en soufre de la fonte après sa désulfuration. Une telle pollution se produit inévitablement dans le cas du four à cuve unique lors de la remise de la fonte dans le four après sa désulfuration.

En plus ou à la place de l'opération de désulfuration de la fonte (ou, de manière plus générale, du "métal carburé" si celui-ci ne contient pas au moins les 3 % environ de carbone qui lui vaudraient d'être appelé "fonte"), on peut prévoir d'effectuer d'autres opérations de préaffinage, telles qu'une désiliciation ou une déphosphoration. On peut alors modifier le schéma d'élaboration proposé ci-dessous en conséquence.

Bien entendu, des variantes à l'installation qui vient d'être décrite sont imaginables sans sortir de l'invention. En particulier, non seulement l'électrode de voûte mais la voûte qu'elle traverse peuvent être communes aux deux cuves du four. Une autre variante possible serait de prévoir, comme cela est déjà connu sur les fours d'aciérie à double cuve, un dispositif qui ferait transiter dans la cuve hors tension les gaz chauds s'échappant de la cuve sous tension, afin de réaliser un préchauffage des matières déjà enfournées dans la cuve hors tension. Enfin, comme on l'a dit, on peut utiliser deux fours électriques classiques complets au lieu d'un four à double cuve et alimentation électrique unique. Mais la construction de l'installation serait plus onéreuse, sans que cela résulte en un gain de productivité significatif.

## Revendications

1. Procédé de production d'acier liquide selon lequel on réalise la fusion de matières ferreuses constituées par des minerais préréduits contenant plus de 4 % de carbone et plus de 0,06 % de soufre de manière à obtenir un métal liquide carburé, puis la décarburation dudit métal liquide de manière à le transformer en acier liquide, caractérisé en ce qu'on réalise la fusion desdites matières ferreuses dans une première cuve d'un four électrique, on réalise ensuite un prétraitement du métal liquide carburé ainsi obtenu dans une installation de prétraitement séparée, et on réalise enfin la décarburation dudit métal liquide carburé dans une deuxième cuve d'un four électrique, ledit prétraitement du métal liquide comportant une désulfuration dudit métal.

2. Procédé selon la revendication 1, caractérisé en ce qu'on ajoute dans ladite deuxième cuve, avant et/ou pendant ladite décarburation, des matières ferreuses à faible teneur en soufre.

3. Procédé selon la revendication 2, caractérisé en ce que lesdites matières ferreuses à faible teneur en soufre sont constituées par du minerai de fer préréduit préalablement appauvri en matières carbonées.

4. Procédé selon la revendication 3, caractérisé en ce que ledit minerai de fer préréduit a été appauvri en matières carbonées par séparation magnétique.

5. Procédé selon les revendications 1 à 4, caractérisé en ce que lesdites première et deuxième cuves sont constituées par les deux cuves d'un four électrique à arc à double cuve et alimentation électrique unique.

## Claims

1. Process for producing liquid steel, in which process ferrous materials consisting of prereduced ores containing more than 4% carbon and more than 0.06% sulphur are melted so as to obtain a carburized liquid metal and then the said liquid metal is decarburized so as to convert it into liquid steel, characterized in that the said ferrous materials are melted in a first vessel of an electric furnace, then the carburized liquid metal thus obtained undergoes a pretreatment in a separate pretreatment plant and finally, the said carburized liquid metal is decarburized in a second vessel of an electric furnace, the said pretreatment of the liquid metal comprising desulphurization of the said metal.

2. Process according to Claim 1, characterized in that, before and/or during the said decarburization, ferrous materials having a low sulphur content are added to the said second vessel.

3. Process according to Claim 2, characterized in that the said ferrous materials having a low sulphur content consist of prereduced iron ore that has been depleted beforehand of carbonaceous matter.

4. Process according to Claim 3, characterized in that the said prereduced iron ore has been depleted of carbonaceous matter by magnetic separation.

5. Process according to Claims 1 to 4, characterized in that the said first and second vessels consist of the two vessels of a twin-vessel electric arc furnace with a single electrical supply.

## Patentansprüche

1. Verfahren zur Herstellung von flüssigem Stahl, nach dem man eisenhaltige Stoffe zum Schmelzen bringt, die aus vorreduzierten Erzen bestehen, die einen Gehalt von mehr als 4 % Kohlenstoff und mehr als 0,06 % Schwefel haben, um ein flüssiges, kohlenstoffhaltiges Metall zu erhalten, anschließend dem flüssigen Metall den Kohlenstoff entzieht, um es in flüssigen Stahl umzuwandeln, dadurch gekennzeichnet, dass man das Schmelzen der eisenhaltigen Stoffe in einem ersten Gefäß eines Elektroofens vornimmt, anschließend in einer getrennten Vorbehandlungsvorrichtung eine Vorbehandlung des so erhaltenen flüssigen, kohlenstoffhaltigen Metalls und schließlich in einem zweiten Gefäß eines Elektroofens die Dekarbonisierung des flüssigen, kohlenstoffhaltigen Metalls vornimmt, wobei die Vorbehandlung des flüssigen Metalls eine Entschwefelung des Metalls umfasst.

2. Verfahren nach Anspruch 1, dadurch gekennzeichnet, dass in das zweite Gefäß vor und/oder während der Dekarbonisierung eisenhaltige Stoffe mit geringem Schwefelgehalt zugegeben werden.

3. Verfahren nach Anspruch 2, dadurch gekennzeichnet, dass die eisenhaltigen Stoffe mit geringem Schwefelgehalt aus vorreduziertem Eisenerz bestehen, das vorab an kohlenstoffhaltigen Stoffen abgereichert wurde.

4. Verfahren nach Anspruch 3, dadurch gekennzeichnet, dass das vorreduzierte Eisenerz durch Magnetscheidung an kohlenstoffhaltigen Stoffen abgereichert wurde.

5. Verfahren nach den Ansprüchen 1 bis 4, dadurch gekennzeichnet, dass das erste und zweite Gefäß von den beiden Gefäßen eines Lichtbogenofens mit zwei Gefäßen und einer einzigen Energiezufuhr gebildet werden.
